# EUROPEAN PATENT SPECIFICATION

(11) **EP 4 266 449 B1**
(45) Date of publication and mention of the grant of the patent: **03.06.2026**
(21) Application number: 22168710.6
(22) Date of filing: 19.04.2022
(51) Int. Cl.: H01M 10/48, G01L 1/22, H01M 50/131

(54) **BATTERY ARRANGEMENT AND METHOD FOR ESTIMATING AT LEAST ONE PROPERTY OF A BATTERY CELL OF A BATTERY ARRANGEMENT**
BATTERIEANORDNUNG UND VERFAHREN ZUM ABSCHÄTZEN MINDESTENS EINER EIGENSCHAFT EINER BATTERIEZELLE EINER BATTERIEANORDNUNG
AGENCEMENT DE BATTERIE ET PROCÉDÉ D'ESTIMATION D'AU MOINS UNE PROPRIÉTÉ D'UNE CELLULE DE BATTERIE D'UN AGENCEMENT DE BATTERIE

(43) Date of publication of application: 25.10.2023
(73) Proprietor: ABB SCHWEIZ AG, 5400 Baden (CH)
(72) Inventor: TROENDLE, Pirmin, 79761 Waldshut-Tiengen (DE); SCHULER, Gabriel, 6415 Arth (CH); HE, Minglong, 5400 Baden (CH)
(74) Representative: Sykora & König Patentanwälte PartG mbB

(56) References cited:
- US-A1- 2019 393 696
- US-A1- 2020 203 783
- US-A1- 2021 104 783
- US-A1- 2022 037 708

## Description

### FIELD OF THE INVENTION

The invention relates to the field of battery arrangements. In particular, the invention relates to a battery arrangement and to a method for estimating at least one property of a battery cell of a battery arrangement.

### BACKGROUND OF THE INVENTION

An increasing number of vehicles, e.g. cars, trains, subways, busses, is equipped with battery cells, in particular high-performance battery cells. A typical standard or high-performance battery cell may have a nominal capacity between 1 Ah and 1000 Ah and may be used for driving the corresponding vehicle, in particular for providing energy to a power train of the corresponding vehicle.

Conventional high-performance battery cells may be fully assembled as battery arrangements and encapsulated in modules or directly in packs. Then, the modules may be combined and encapsulated as battery packages. These battery packages may be arranged in the vehicles. In the most cases, the battery packages are not designed to be removed easily, e.g. in order to check one or more of the battery cells. In contrast, it is common practice that intense efforts have to be taken to determine some properties of the battery cells, e.g. an age and/or a State of Health (SOH) of the battery cells, within the battery modules and/or within the battery packages.

The SOH is a figure of merit that indicates the battery level of degradation. The SOH represents a ratio between a current maximum effective capacity and an initial capacity of a battery. Due to a complex and nonlinear aging and degradation behavior of the battery cells, accurate SOH estimation may be challenging and time consuming. However, properly estimating the SOH may be essential to evaluate the battery life and further continuing safe operation of the battery. It may provide an accurate knowledge on a current battery performance. For example, that knowledge may help to manage an energy distribution within the battery cells, battery arrangements and/or modules, and battery packs, and may lower their consumption and increase their lifetime. Beside SOH detection, abrupt occurring cell abuse due to e.g. electrical overload, thermal overuse or external induced mechanical abuse are operation critical cases which need to be monitored to enable early detection and appropriate measures to safely handle these issues.

Different approaches already have been employed for real-time SOH estimations. There are three main indicators that define this state, an internal resistance of the battery cell, an impedance of the battery cell, and/or its capacity. Most conventional experimental methods are conducted in laboratories since they require specific equipment (e.g., electrochemical impedance spectroscopy) and are often expensive and time consuming. They are based on collecting data and measurements that can be used to understand and evaluate the battery aging behavior. Those data may be beneficial to other SOH estimation methods, e.g., model-based methods and machine learning methods.

The estimation of battery SOH is a crucial topic for the battery industry and academic research. Battery swelling detection beside electrical cell characterization may be one of the indications of battery state of health. In addition, significant cell gassing and subsequent cell swelling and/or an increased temperature of the battery cell may indicate significant cell ageing and an increased risk with lower safety in case of further continuation of cell operation. Therefore, clear and cheap measures to indicate cell swelling may be a key.

There are various approaches to monitor the SOH via introducing pressure sensors to monitor the internal gas pressure, swell force on the electrode, and/or external cell swelling. However, the pressure sensors and analyzing methods used up to now may be very expensive and time-consuming and in most cases complex, expensive and time consuming electrical tests may be necessary. In particular, adding additional sensors to each battery cell may be cost intensive and may add additional complexity, resulting in total higher risk of errors on the corresponding detection system. Further, in many cases space-consuming complex devices, e.g. pressure transducers and/or load cells, and their electrical connections are conventionally necessary.

US 2020/203783 A1 describes that swelling is a common occurrence in rechargeable batteries, wherein portions of the battery may actually enlarge so as to manipulate, or warp, the battery's standard shape. A swollen battery may not be able to properly interface with surrounding circuitry in an electronic device due to its warped shaped, which may lead to mechanical failure. The detection of a swelling condition prior to mechanical failures allows for interventions such as alerting a user, changing charge parameters, disabling charging, etc. In order to solve this issue, a method for effectively detecting battery swelling by utilizing conductive ink, or a similar printed resistive element, e.g. an electrically conductive ink, that is printed on the cell body and its resistance may be measured by a controller circuit is described. For example, a line of conductive ink may be drawn around the outer circumference, or outer surface, of the battery at one or more portions. It is further teached that this designation is not intended to be limiting, and that one skilled in the art would recognize that other printed resistive elements may also be utilized. Then, based on these measurements, an aspect of the battery swelling may be identified.

US 2021/104783 A1 describes a battery including a battery management system (BMS) for measuring a voltage and a current of the battery, and to deduce charge level and one or more State-of-Health(SoH) parameters indicating the state of cells of the battery. The BMS may include a conductive strip for determining whether the battery has physically expanded or swollen to sufficient degree such that the battery is unsuitable for continued use. Particularly, the conductive strip may define a narrowed portion that is configured to break apart or otherwise separate between ends and such that there is no longer electrical conductivity between ends. The conductive strip may break apart when the battery swells or expands sufficiently at or about a portion of the battery where the conductive strip is located. If there is conductivity, it may be assumed that the battery has not swollen to an unsafe condition. If there is not conductivity, it may be assumed that the battery has expanded or swollen to an unsafe condition. The conductivity measurement circuitry is configured to monitor conductivity between ends and to indicate whether conductivity between ends meets a predetermined threshold. In particular, the BMS may control an indicator to present an alert in response to determining that the current level meets the predetermined threshold, or that there is no conductivity between ends.

### DESCRIPTION OF THE INVENTION

Therefore, it is an objective of the present invention to provide a battery arrangement comprising at least two battery cells, the battery arrangement enabling an estimation of at least one property of at least one of the battery cells, e.g. a SOH and/or an age of the corresponding battery cell, in particular without requiring complex instrumented laboratory-based tests. In particular, the battery arrangement may allow a user to estimate the corresponding property of the battery cell without any cost-intensive, space-consuming, and/or time-consuming electrical tests. It may also offer an option to estimate the corresponding property of the battery cell automatically, e.g. with a BMS.

Further, it is an objective of the present invention to provide a method for estimating the at least one property of the battery cell of the battery arrangement which may be carried out easily, in a simple way, fast, and/or cost-efficient, in particular without requiring complex instrumented laboratory-based tests. In particular, the method may allow the user to estimate the corresponding property of the battery cell without any cost-intensive, space-consuming, and/or time-consuming electrical tests. It also offers an option to estimate the corresponding property of the battery cell automatically, e.g. with the BMS.

These objectives are achieved by the subject-matter of the independent claims. Further exemplary embodiments are evident from the dependent claims and the following description.

In particular, an objective of the present invention is achieved by a battery arrangement, comprising: at least one battery cell comprising a cell housing and at least two electrical terminals at the cell housing for providing and/or receiving electrical energy; at least one electric circuit coupled to the cell housing, the electric circuit being configured for changing its electrical resistance because of a swelling of the cell housing and/or an increasing temperature of the battery cell; and a battery management system electrically coupled to the electric circuit and being configured for estimating at least one property of the battery cell depending on the electrical resistance of the electric circuit.

The electric circuit may be configured for changing its electrical resistance upon the swelling of the cell housing by using an electrically conductive portion of the cell housing as a part of the electric circuit, wherein the electrically conductive portion is stretched by the swelling of the cell housing such that the electrical resistance of this portion and thereby of the electric circuit changes; by directly and physically coupling at least a part of the electrical circuit with a portion of the cell housing which is stretched by the swelling of the cell housing such that the corresponding part of the electric circuit is also stretched and thereby its electrical resistance and that of the electric circuit is changed; and/or by providing the electric circuit such that it is interrupted in an initial state, thereby providing a very high electrical resistance, and that it is closed when the battery cell swells, thereby lowering the electrical resistance.

The property of the battery cell may be an age, a state of health (SOH), a thermal runaway, and/or a wear state of the battery cell. The battery cells, in particular the high-performance battery cells, may comprise e.g. Li-ion cells. During an ageing and/or a degradation of the battery cells, an effective cell capacity may drop accompanied by various ageing features such as increased internal cell resistance, increased temperature, and gas pressure within the battery cell. Further, materials of electrodes of the battery cells and electrolyte components may continuously degrade, resulting in lithium-ion loss and gas evolution. The cell swelling, the temperature increase, and the increased cell volume may be used as an analytical tool to do a quantitative estimation of the ageing and/or SOH of the battery cell. Thus, the electrical resistance of the electric circuit may be utilized for the estimation of the age of the battery cell and/or an interpretation of the SOH within three steps:
Firstly, the electrical resistance of the electric circuit may be interpreted with respect to the pressure originated from the swelling of the battery cell and the electric circuit. Secondly, the pressure and/or the temperature may be correlated to the internal gas pressure and/or gas volume within the battery cell. Thirdly, the gas volume may be correlated to the ageing and/or SOH of the battery cell.

So, the battery arrangement enables a method for estimating the at least one property of the battery cell, e.g. the SOH and/or the age of the battery cell, in particular without requiring complex instrumented laboratory-based tests. In particular, the battery arrangement may allow the user to estimate the corresponding property of the battery cell without any which is cost-intensive, space-consuming, and/or time-consuming electrical tests. It may also offer an option to estimate the corresponding property of the battery cell automatically, e.g. with a BMS. This further allows for a very long and safe battery cell and thereby battery arrangement operation. Further, an offline and/or online SOH monitoring method may be used by the BMS on cell/module/pack level of the battery arrangement without requiring complex instrumented laboratory-based tests.

The BMS may comprise a memory and a controller coupled to the memory. A table and/or characteristic curve assigning the electrical resistance to the pressure and a table assigning the pressure to estimated ages and/or SOHs may be stored on the memory and may be investigated for estimating the ages and/or states of health. Alternatively, a table and/or characteristic curve assigning the electrical resistance directly to the estimated ages and/or SOHs may be stored on the memory for estimating the ages and/or states of health.

On the battery arrangement level, i.e. battery module and/or battery pack level, the user, especially a service engineer, may choose to monitor the property of the corresponding battery cells in a continuous mode by connecting the battery arrangement to the BMS, in particular the controller of the BMS. It may avoid a disassembly of the battery module and/or battery pack. This may be combined with and/or compared to other estimation methods, for example, the conventional approach using the open circuit voltage profile.

The pressure acting on the battery cell may be the pressure within the cell housing. The battery cell may be a high-performance battery cell having a nominal capacity between 1 Ah and 1000 Ah. The nominal capacity may be between 20 Ah and 500 Ah, e.g. between 25 Ah and 100 Ah. The electrical terminals may be arranged at opposing sides of the cell housing. The electrical terminals may correspond to the poles of the battery cell. For example, one of the electrical terminals may correspond to the plus-pole and the other one of the electrical terminals may correspond to the minus-pole of the battery cell. The cell housing may have a prismatic shape. For example, the cell housing may have a cuboid shape.

According to an embodiment, the battery arrangement comprises the battery cell and at least one further corresponding battery cell, wherein the battery cells are arranged adjacent to each other such that there is a given distance between the battery cells in an initial state of the battery arrangement; each of the cell housings of the battery cells comprises at least one electrically conductive portion, the electric circuit comprises the electrically conductive portions of the cell housings, and the battery cells are arranged such that the swelling of one or both of the battery cells decreases the distance between the battery cells until the electrically conductive portion of one of the battery cells touches the electrically conductive portion of the other battery cell, thereby lowering the electrical resistance of the electric circuit. In the initial state, the battery cells and/or the battery arrangement may be new, renewed, and/or in a very good SOH. The distance between the battery cells may act as a threshold for lowering the electrical resistance. In particular, the closer the battery cells are arranged in the initial state the earlier the electric circuit is closed by the swelling cell housing and the lower is the threshold. In contrast, the further away the battery cells are arranged from each other in the initial state the later the electric circuit is closed by the swelling cell housing and the higher is the threshold.

According to an embodiment, the cell housings are formed by an electrically conductive material such that the electrically conductive portions extend over the whole corresponding cell housing. In other words, the cell housings may be completely electrically conductive.

According to an embodiment, the electric circuit comprises at least one electric line extending around the cell housing, the electric line being configured for changing its length and thereby its electrical resistance upon the swelling of the cell housing. When the cell housing swells because of the increasing age of the battery cell, because of attrition of the battery cell, and/or because of the thermal runaway of the battery cell, the electric line gets stretched and a length of the electric line changes. This change of the length leads to a change of the electrical resistance of the electric circuit, which is representative for the health condition and/or an age of the battery cell. The electric line may be a simple wire, which may be electrically isolated against its environment. Alternatively, the electric line may be printed on or embedded within an adhesive tape which may be adhered to the cell housing.

According to an embodiment, the battery arrangement comprises an adhesive tape which is adhered to the cell housing, wherein the electric line is embedded within or printed on the adhesive tape.

According to an embodiment, the cell housing of the battery cell comprises at least one electrically conductive portion, an insulating layer is arranged on the electrically conductive portion, an electrically conductive pin is arranged on the insulating layer, the electric circuit comprises the electrically conductive portion of the cell housing and the pin, the insulating layer is sandwiched between the electrically conductive portion of the cell housing and the pin such that the insulating layer electrically isolates the electrically conductive portion against the pin in an initial state of the battery cell, and the insulating layer is configured for being cracked by the swelling of the cell housing and/or by the increasing temperature of the battery cell such that the electrically conductive portion contacts the pin and the electrical resistance of the electric circuit changes. So, the electric circuit may be formed and arranged such that it is opened in the initial state and that it gets closed by the pin contacting, i.e., physically touching, the electrically conductive portion upon swelling of the cell housing. So, in the initial state, the electric circuit is open and has a very large electrical resistance. The electric circuit is closed when the cell housing swells and cracks the insulating layer and thereby the electrical resistance of the electric circuit drops. The battery cell may comprise a packaging film for at least partly encapsulating the cell housing. The packaging film may be made from an electrically isolating material and may comprise the insulating layer. In case of the melting because of the increasing temperature, the insulating layer 48 may be configured for melting at temperatures higher than 60°, e.g. higher than 70°, e.g. higher than 80°.

According to an embodiment, the battery arrangement comprises a signal element within the electric circuit, the signal element being configured to provide a warning signal when the electrically conductive portion contacts the pin. For example, the signal element may be configured for providing an optical and/or an acoustical warning signal. For example, the signal element may comprise a light source and/or sound source. For example, the signal element may comprise a light emitting element, e.g. a LED or OLED, and/or a speaker.

An objective of the present invention is achieved by a method for estimating the at least one property of the battery cell of the above battery arrangement. The method comprises the steps of: monitoring the electrical resistance of the electric circuit, the electric circuit being coupled to the cell housing of the battery cell and being configured for changing its electrical resistance upon the swelling of the cell housing; and estimating the at least one property of the battery cell depending on the electrical resistance of the electric circuit.

The above features, advantages and/or effects of the battery arrangement may be transferred to the method for estimating the at least one property of the battery cell of the battery arrangement. Therefore, a repetition of these features, advantages and/or effects is omitted and it is referred to the above explanations only in order to provide a concise description.

According to an embodiment, the at least one property of the battery cell is estimated when the electrical resistance changes.

According to an embodiment, the at least one property of the battery cell is estimated when the electrical resistance meets or falls below a predetermined threshold. The threshold may be given by the distance of the battery cells to each other, by a thickness of the insulating layer, and/or simply by a digital threshold used by the BMS which monitors the electrical resistance of the electric circuit.

According to an embodiment, the property comprises an age, a state of health, a thermal runaway, and/or a wear state of the battery cell.

These and other aspects of the invention will be apparent from and elucidated with reference to the embodiments described hereinafter.

### BRIEF DESCRIPTION OF THE DRAWINGS

The subject matter of the invention will be explained in more detail in the following text with reference to exemplary embodiments which are illustrated in the attached drawings.
Fig. 1 schematically shows a side view of an exemplary embodiment of a battery arrangement in a first state;
Fig. 2 schematically shows a side view of the battery arrangement of figure 1 in a second state;
Fig. 3 schematically shows a side view of an exemplary embodiment of a battery arrangement in a first state;
Fig. 4 schematically shows a side view of the battery arrangement of figure 4 in a second state;
Fig. 5 schematically shows a side view of an exemplary embodiment of a battery arrangement in a first state;
Fig. 6 schematically shows a side view of the battery arrangement of figure 6 in a second state.

The reference symbols used in the drawings, and their meanings, are listed in summary form in the list of reference symbols. In principle, identical parts are provided with the same reference symbols in the figures.

### DETAILED DESCRIPTION OF EXEMPLARY EMBODIMENTS

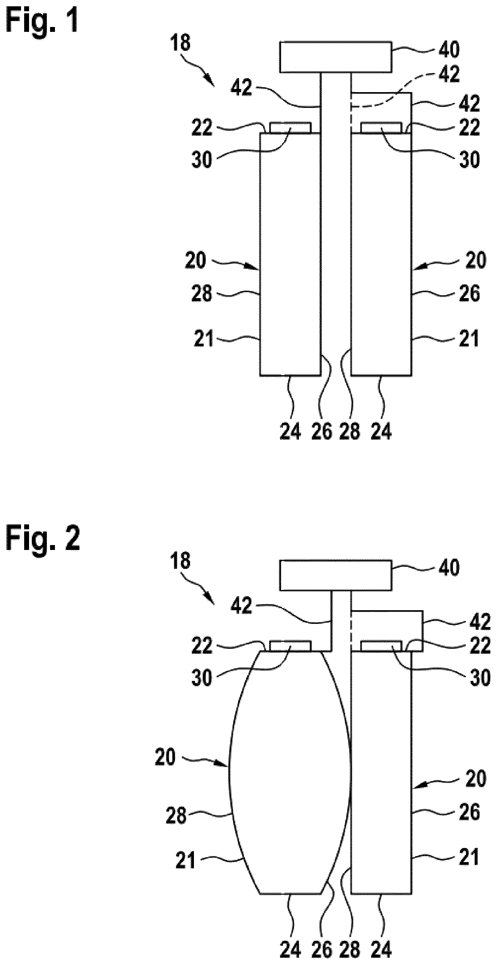

Fig. 1 schematically shows a side view of an exemplary embodiment of a battery arrangement 18 in a first state. The battery arrangement 18 comprises two or more battery cells 20. The battery arrangement 18 may be referred to as part of a battery module or battery pack. The battery arrangement 18 may comprise a module housing (not shown). For example, the battery arrangement 18 may be used for driving a car, a train, a subway, a bus, etc.

The first state may correspond to an initial state. In the initial state, the battery arrangement 18 may be new or renewed and/or may comprise one or more new or renewed battery cells 20. In the first state, the battery cell 20 may be not deformed, i.e. not swollen, and/or the state of health (SOH) may be 100%.

The battery cells 20 may be high-performance battery cells 20. Each of the high-performance battery cells 20 may have a nominal capacity between 1 Ah and 1000 Ah. The nominal capacity may be between 20 Ah and 500 Ah, e.g. between 25 Ah and 100 Ah.

The battery cells 20 each may comprise a cell housing 21 and at least two electrical terminals, in particular a first terminal 30 and a second terminal 32. The cell housings 21 each may comprise a top side 22, a bottom side 24, a lateral first side 26, and a lateral second side 28. The first side 26 of one of the battery cells 20 may face the second side 28 of the other battery cell 20.

Each of the cell housings 21 of the battery cells 20 comprises at least one electrically conductive portion. For example, the cell housings 21 are formed by an electrically conductive material such that the electrically conductive portions extend over the whole corresponding cell housing 21. In other words, the cell housings 21 may be completely electrically conductive. Alternatively, the electrically conductive portions may only be arranged on sides 26, 28 of the cell housings 21 which face each other. For example, a first electrically conductive portion may be arranged on the first side 26 of the left battery cell 20 of figure 1 and a second electrically conductive portion may be arranged on the second side 26 of the right battery cell 20 of figure 1 (the dashed line indicates an optional connection between the second electrically conductive portion and the BMS 40). Alternatively, the electrically conductive portions may only be arranged on the first sides 26 of the cell housings 21 wherein the electrically conductive portions of each one of the battery cells 20 are electrically coupled with each other. For example, the electrically conductive portions may be arranged on the first sides 26 of the battery cells 20, wherein the electrically conductive portions of each one of the battery cells 20 may be electrically coupled to each other. Optionally, the cell housings 21 each may have a prismatic shape. For example, the cell housings 21 may have a cuboid shape.

The terminals 30, 32 may be arranged at opposing sides or at the same side of the cell housing 21. The terminals 30, 32 may correspond to the poles of the battery cell 20. For example, one of the terminals 30, 32 may correspond to the plus-pole and the other one of the terminals 30, 32 may correspond to the minus-pole of the corresponding battery cell 20.

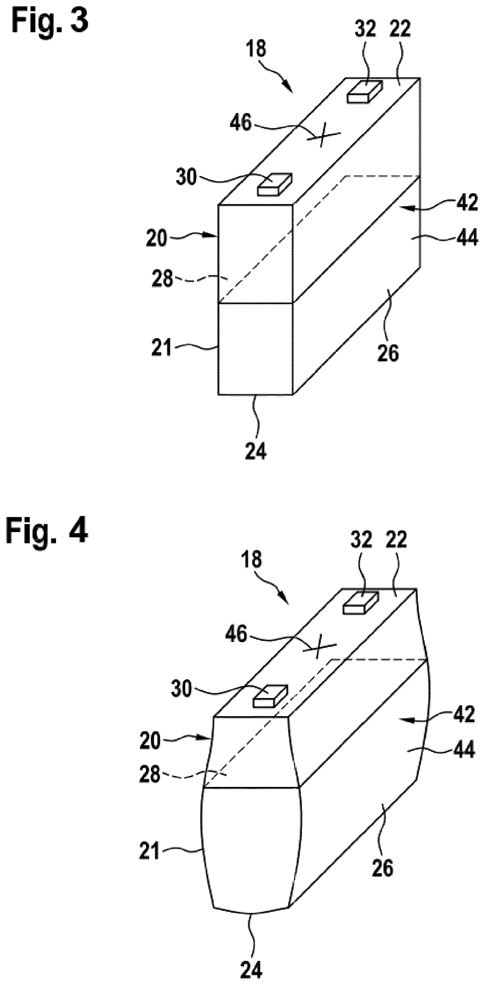

A battery management system (BMS) 40 is coupled to the battery cells 20 via an electric circuit 42. The BMS 40 may be configured for measuring and/or monitoring an electrical resistance (see figure 3) of the electric circuit 42. In the initial state, the electric circuit 42 may be open such that the electrical resistance of the electric circuit 42 is very high, e.g. infinite. The electric circuit 42 may comprise one or more electric lines coupling the BMS 40 to the cell housings 21. The electric circuit 40 may comprise the electrically conductive portions of the cell housings 21. The battery cells 20 may be arranged such that a swelling of one or both of the battery cells 20 decreases the distance between the battery cells 20 until the electrically conductive portion of one of the battery cells 20 touches the electrically conductive portion of the other battery cell 20 (see figure 2), thereby lowering the electrical resistance of the electric circuit 42.

The distance between the battery cells 20 may act as a threshold for lowering the electrical resistance. In particular, the closer the battery cells 20 are arranged in the initial state the earlier the electric circuit 42 is closed by the swelling cell housing 21 and the lower is the threshold. In contrast, the further away the battery cells 20 are arranged from each other in the initial state the later the electric circuit 42 is closed by the swelling cell housing 21 and the higher is the threshold.

Fig. 2 schematically shows a side view of the battery arrangement 18 of figure 1 in a second state. In the second state, one of the battery cells 20 is swollen such that the electrically conductive portion of the swollen battery cell 20 physically touches the electrically conductive portion of the other battery cell 20. Alternatively, both battery cells 20 may be swollen such that their electrically conductive portions may touch each other. When the electrically conductive portions of adjacent battery cells 20 touch each other, the electric circuit 42 gets closed and its electrically resistance drops dramatically. This drop may be detected by the BMS 40. Then, the BMS 40 may determine that at least one of the battery cells 20 is too old and/or its SOH is to bad such that the corresponding battery cell 20 has to be substituted or the entire module or part of the battery systems needs to be replaced. The BMS 40 may provide a predetermined measure, when the electrical resistance drops. For example, the battery arrangement 18 may be shut-off and/or may be separated from the device (not shown) which is driven by the energy from the battery arrangement 18 and/or from a device (not shown) which loads energy into the battery arrangement 18. Alternatively or additionally, the BMS 40 may provide a warning signal to a user or a higher level control, e.g. to a vehicle control of the vehicle driven by the energy from the battery arrangement 18.

In general, an internal electrical resistance of a battery cell, as for example the battery cell 20, increases with decreasing SOH. A pressure within the battery cell 20 increases with the increasing internal resistance of the battery cell 20. A gas volume within the battery cell 20 increases with increasing pressure and the cell housing 21 swells in accordance with the increasing gas volume. In particular, the cell housing 21 swells with decreasing SOH. So, the SOH may be derived from the swelling of the cell housing which may be detected by monitoring the electrical resistance of the electric circuit 42.

Optionally, the age of the battery cell 20 may be derived from the SOH. For example, an interdependence of the age and the SOH may be empirically determined in advance and may be stored in form of a characterising curve or table within a memory of a controller of the BMS 40. Then, the controller may easily determine the age of the battery cell 20 depending on the SOH by consulting the characterising curve or table.

Fig. 3 schematically shows a side view of an exemplary embodiment of a battery arrangement 18 in a first state. The battery arrangement 18 may widely correspond to the battery arrangement 18 of figure 1. Therefore, only those features of the battery arrangement 18 are explained in the following in which the battery arrangement 18 of figure 3 differs from the battery arrangement 18 of figure 1. The first state may correspond to the initial state. In the first state, the battery cell 20 may be not deformed, i.e. not swollen, and/or the state of health (SOH) may be 100%.

The cell housing 21 does not have to have any electrically conductive portions. However, the cell housing 21 may optionally have one or more electrically conductive portions. For example, the cell housings 21 may be made from an electrically conductive material which may be covered by a packaging film. The packaging film may comprise an electrically insulating material.

The electric circuit 42 may comprise at least one electric line 44 extending around the cell housing 21. The electric line 44 may be a simple wire, which may be electrically isolated against its environment. Alternatively, the electric line 44 may be printed on or embedded within an adhesive tape which may be adhered to the cell housing 21. The electric line 44 may be embedded within or printed on the adhesive tape.

The high-performance battery cell 20 may comprise a vent 28. The vent 28 may be configured to release gas from inside of the battery cell 20 if the internal pressure P of the gas exceeds a predetermined gas pressure threshold. For example, the vent 28 may comprise or may consist of a vent disc and/or bursting disc. Optionally, the battery cells 20 shown in figure 1 each may also comprise a corresponding vent 28.

The electric line 44 may be configured for changing its length and thereby its electrical resistance upon the swelling of the cell housing 21. When the cell housing 21 swells because of the increasing pressure within the battery cell 20, because of attrition of the battery cell 20, and/or because of the thermal runaway of the battery cell 20, the electric line 44 gets stretched and a length of the electric line 44 changes.

Fig. 4 schematically shows a side view of the battery arrangement 18 of figure 3 in a second state. In the second state, the battery cell 20 is swollen such that the electric line 44 of the electric circuit 42 is stretched and its length is increased. This change of the length leads to an increase of the electrical resistance of the electric circuit 42, which is representative for the health condition and/or an age of the battery cell 20. This increase may be detected by the BMS 40. Then, the BMS 40 may determine that at least one of the battery cells 20 is too old and/or its SOH is too bad such that the corresponding battery cell 20 has to be substituted. The BMS 40 may provide one or more of the above predetermined measures, when the electrical resistance changes.

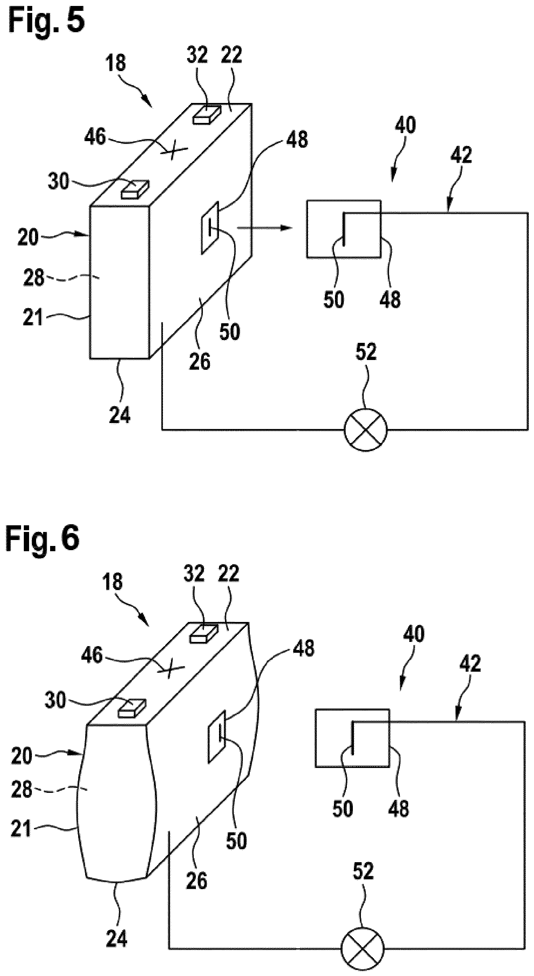

Fig. 5 schematically shows a side view of an exemplary embodiment of a battery arrangement in a first state. The battery arrangement 18 may widely correspond to one of the above battery arrangements 18. Therefore, only those features of the battery arrangement 18 are explained in the following in which the battery arrangement 18 of figure 5 differs from the above battery arrangements 18. The first state may correspond to the initial state. In the first state, the battery cell 20 may be not deformed, i.e. not swollen, the temperature may be in a normal region, and/or the state of health (SOH) may be 100%. The "normal" region of the temperature may refer to temperatures between -10° and 60°, e.g. between 0° and 50°.

The cell housing 21 of the battery cell 21 may comprise at least one electrically conductive portion, e.g. as explained with respect to figures 1 and 2. An insulating layer 48 may be arranged on the electrically conductive portion. An electrically conductive pin 50 may be arranged on the insulating layer 48. The electric circuit 42 may comprise the electrically conductive portion of the cell housing 21 and the pin 50. The insulating layer 48 may be sandwiched between the electrically conductive portion and the pin 50 such that the insulating layer 48 electrically isolates the electrically conductive portion against the pin 50 in the initial state of the battery cell 20.

The insulating layer 48 may be configured for being cracked by the swelling of the cell housing 21 or for being melted by the increasing temperature of the battery cell such that the electrically conductive portion contacts the pin 50 (see figure 6) and the electrical resistance of the electric circuit 42 changes, in particular drops dramatically. This drop may be detected by the BMS 40. In case of the melting because of the increasing temperature, the insulating layer 48 may be configured for melting at temperatures higher than 60°, e.g. higher than 70°, e.g. higher than 80°.

Fig. 6 schematically shows a side view of the battery arrangement 18 of figure 5 in a second state. In the second state, the battery cell 20 is swollen such that the electrically conductive portion of the swollen battery cell 20 physically touches the pin 50. Alternatively or additionally, the temperature of the battery cell 20 is increased above the normal region such that the insulating layer 48 is melted and that the electrically conductive portion of the swollen battery cell 20 physically touches the pin 50. So, the electric circuit 42 may be formed and arranged such that it is opened in the initial state and that it gets closed by the pin 50 contacting, i.e., physically touching, the electrically conductive portion upon the swelling and/or the increasing temperature of the battery cell 20, in particular the cell housing 21.

In the initial state, the electric circuit is open and has a very large electrical resistance. The electric circuit 42 is closed when the cell housing 21 swells and cracks the insulating layer 48 and thereby the electrical resistance of the electric circuit 42 drops. The battery cell 20 may comprise a packaging film for at least partly encapsulating the cell housing 21. The packaging film may be made from an electrically isolating material and may comprise the insulating layer 48.

Optionally, one or more of the above battery arrangements 18 may comprise a signal element 52 for providing a warning signal when the battery cell(s) 20 swell, e.g. when the electrically conductive portion of one of the battery cells 20 contacts the electrically conductive portion of the adjacent battery cell 20, and/or when the electrically conductive portion of one of the battery cells 20 contacts the corresponding pin 50. The signal element 52 may be arranged within and/or may be electrically coupled to the electric circuit 42. The signal element 52 may be configured for providing an optical and/or an acoustical warning signal. For example, the signal element 52 may comprise a light source and/or sound source. For example, the signal element 52 may comprise a light emitting element, e.g. a LED or OLED, and/or a speaker.

A method for estimating the at least one property of one or more of the above battery cells 20 of one or more of the above battery arrangements 18 may comprise the steps of monitoring the electrical resistance of the electric circuit 42, the electric circuit 42 being electrically coupled to the cell housing(s) 21 of the corresponding battery cell(s) 20 and being configured for changing its electrical resistance upon the swelling of the cell housing(s) 21; and estimating the at least one property of the battery cell(s) 20 depending on the electrical resistance of the electric circuit 42. For the estimation, one or more of the above thresholds may be used, wherein the BMS 40 may determine that one or more of the battery cells 20 have to be removed and/or substituted and/o may issue the predetermined measure, e.g., providing the warning signal, when the measured electrical resistance meets or passes the corresponding threshold.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practising the claimed invention, from a study of the drawings, the disclosure, and the appended claims. For example, all of the above battery cells 20 may be configured as stand-alone battery cell, within one of the battery arrangements 18, e.g. within corresponding battery modules, and/or within a battery pack comprising one or more of the battery arrangements 18 and optionally the controller and/or the BMS.

In the claims, the word "comprising" does not exclude other elements or steps, and the indefinite article "a" or "an" does not exclude a plurality. A single processor or controller or other unit may fulfil the functions of several items recited in the claims. The mere fact that certain measures are recited in mutually different dependent claims does not indicate that a combination of these measures cannot be used to advantage. Any reference signs in the claims should not be construed as limiting the scope.

### LIST OF REFERENCE SYMBOLS

- 18: battery arrangement
- 20: battery cell
- 21: cell housing
- 22: top side
- 24: bottom side
- 26: first side
- 28: second side
- 30: first terminal
- 32: second terminal
- 40: battery management system
- 42: electric circuit
- 44: electric line
- 46: vent
- 48: insulating layer
- 50: pin
- 52: signal element

## Claims

1. A battery arrangement (18), comprising:
at least one battery cell (20) comprising a cell housing (21) and at least two electrical terminals (30, 32) at the cell housing (21) for providing and/or receiving electrical energy;
at least one electric circuit (42) coupled to the cell housing (21), the electric circuit (42) being configured for changing its electrical resistance, because of a swelling of the cell housing (21) and/or an increasing temperature of the battery cell (20); and
a battery management system (40) electrically coupled to the electric circuit (42) and being configured for estimating at least one property of the battery cell (20) depending on the electrical resistance of the electric circuit (42), wherein
the battery cells (20) are arranged adjacent to each other such that there is a given distance between the battery cells (20) in an initial state of the battery arrangement (18);
each of the cell housings (21) of the battery cells (20) comprises at least one electrically conductive portion,
the electric circuit (42) comprises the electrically conductive portions of the cell housings (21), and
the battery cells (20) are arranged such that the swelling of one or both of the battery cells (20) decreases the distance between the battery cells (20) until the electrically conductive portion of one of the battery cells (20) touches the electrically conductive portion of the other battery cell (20), thereby lowering the electrical resistance of the electric circuit (42).

2. The battery arrangement (18) in accordance with claim 1, wherein
the cell housings (21) are formed by an electrically conductive material such that the electrically conductive portions extend over the whole corresponding cell housing (21).

3. A battery arrangement (18), comprising:
at least one battery cell (20) comprising a cell housing (21) and at least two electrical terminals (30, 32) at the cell housing (21) for providing and/or receiving electrical energy;
at least one electric circuit (42) coupled to the cell housing (21), the electric circuit (42) being configured for changing its electrical resistance, because of a swelling of the cell housing (21) and/or an increasing temperature of the battery cell (20); and
a battery management system (40) electrically coupled to the electric circuit (42) and being configured for estimating at least one property of the battery cell (20) depending on the electrical resistance of the electric circuit (42), wherein
the electric circuit (42) comprises at least one wire (44), which is electrically isolated against its environment and which extends around the cell housing (21), the wire (44) being configured for changing its length and thereby its electrical resistance upon the swelling of the cell housing (21).

4. The battery arrangement (18) in accordance with claim 3, comprising an adhesive tape which is adhered to the cell housing (21), wherein the electric line (44) is embedded within or printed on the adhesive tape.

5. A battery arrangement (18), comprising:
at least one battery cell (20) comprising a cell housing (21) and at least two electrical terminals (30, 32) at the cell housing (21) for providing and/or receiving electrical energy;
at least one electric circuit (42) coupled to the cell housing (21), the electric circuit (42) being configured for changing its electrical resistance, because of a swelling of the cell housing (21) and/or an increasing temperature of the battery cell (20); and
a battery management system (40) electrically coupled to the electric circuit (42) and being configured for estimating at least one property of the battery cell (20) depending on the electrical resistance of the electric circuit (42), wherein
the cell housing (21) of the battery cell (20) comprises at least one electrically conductive portion,
an insulating layer (48) is arranged on the electrically conductive portion,
an electrically conductive pin (50) is arranged on the insulating layer (48),
the electric circuit (42) comprises the electrically conductive portion of the cell housing (21) and the pin (50),
the insulating layer (48) is sandwiched between the electrically conductive portion of the cell housing (21) and the pin (50) such that the insulating layer (48) electrically isolates the electrically conductive portion against the pin (50) in an initial state of the battery cell (20), and
the insulating layer (48) is configured for being cracked by the swelling of the cell housing (21) and/or by the increasing temperature of the battery cell (20) such that the electrically conductive portion contacts the pin (50) and the electrical resistance of the electric circuit (42) changes.

6. The battery arrangement (18) in accordance with claim 5, comprising
a signal element (52) within the electric circuit (42), the signal element (52) being configured to provide a warning signal when the electrically conductive portion contacts the pin (50).

## Patentansprüche

1. Batterieanordnung (18), umfassend:
mindestens eine Batteriezelle (20), die ein Zellengehäuse (21) und mindestens zwei elektrische Anschlüsse (30, 32) an dem Zellengehäuse (21) zum Bereitstellen und/oder Aufnehmen elektrischer Energie umfasst;
mindestens einen Stromkreis (42), der mit dem Zellengehäuse (21) gekoppelt ist, wobei der Stromkreis (42) so konfiguriert ist, dass er aufgrund eines Aufquellens des Zellengehäuses (21) und/oder einer steigenden Temperatur der Batteriezelle (20) seinen elektrischen Widerstand ändert; und
ein Batteriemanagementsystem (40), das elektrisch mit dem Stromkreis (42) gekoppelt ist und zum Schätzen mindestens einer Eigenschaft der Batteriezelle (20) in Abhängigkeit von dem elektrischen Widerstand des Stromkreises (42) konfiguriert ist, wobei
die Batteriezellen (20) nebeneinander angeordnet sind, sodass in einem Anfangszustand der Batterieanordnung (18) ein bestimmter Abstand zwischen den Batteriezellen (20) besteht;
jedes der Zellengehäuse (21) der Batteriezellen (20) mindestens einen elektrisch leitenden Abschnitt umfasst, der Stromkreis (42) die elektrisch leitenden Abschnitte der Zellengehäuse (21) umfasst und
die Batteriezellen (20) so angeordnet sind, dass durch das Aufquellen einer oder beider Batteriezellen (20) der Abstand zwischen den Batteriezellen (20) so weit verringert wird, bis der elektrisch leitende Abschnitt einer der Batteriezellen (20) den elektrisch leitenden Abschnitt der anderen Batteriezelle (20) berührt, wodurch der elektrische Widerstand des Stromkreises (42) gesenkt wird.

2. Batterieanordnung (18) nach Anspruch 1, wobei die Zellengehäuse (21) aus einem elektrisch leitenden Material gebildet sind, sodass die elektrisch leitenden Abschnitte sich über das gesamte entsprechende Zellengehäuse (21) erstrecken.

3. Batterieanordnung (18), umfassend:
mindestens eine Batteriezelle (20), die ein Zellengehäuse (21) und mindestens zwei elektrische Anschlüsse (30, 32) an dem Zellengehäuse (21) zum Bereitstellen und/oder Aufnehmen elektrischer Energie umfasst;
mindestens einen Stromkreis (42), der mit dem Zellengehäuse (21) gekoppelt ist, wobei der Stromkreis (42) so konfiguriert ist, dass er aufgrund eines Aufquellens des Zellengehäuses (21) und/oder einer steigenden Temperatur der Batteriezelle (20) seinen elektrischen Widerstand ändert; und
ein Batteriemanagementsystem (40), das elektrisch mit dem Stromkreis (42) gekoppelt ist und zum Schätzen mindestens einer Eigenschaft der Batteriezelle (20) in Abhängigkeit von dem elektrischen Widerstand des Stromkreises (42) konfiguriert ist, wobei
der Stromkreis (42) mindestens einen Draht (44) umfasst, der gegen seine Umgebung elektrisch isoliert ist und der sich um das Zellengehäuse (21) herum erstreckt, wobei der Draht (44) so konfiguriert ist, dass er seine Länge und dadurch seinen elektrischen Widerstand beim Aufquellen des Zellengehäuses (21) ändert.

4. Batterieanordnung (18) nach Anspruch 3, umfassend ein Klebeband, das an das Zellengehäuse (21) geklebt ist, wobei die elektrische Leitung (44) in das Klebeband eingebettet oder darauf gedruckt ist.

5. Batterieanordnung (18), umfassend:
mindestens eine Batteriezelle (20), die ein Zellengehäuse (21) und mindestens zwei elektrische Anschlüsse (30, 32) an dem Zellengehäuse (21) zum Bereitstellen und/oder Aufnehmen elektrischer Energie umfasst;
mindestens einen Stromkreis (42), der mit dem Zellengehäuse (21) gekoppelt ist, wobei der Stromkreis (42) so konfiguriert ist, dass er aufgrund eines Aufquellens des Zellengehäuses (21) und/oder einer steigenden Temperatur der Batteriezelle (20) seinen elektrischen Widerstand ändert; und
ein Batteriemanagementsystem (40), das elektrisch mit dem Stromkreis (42) gekoppelt ist und zum Schätzen mindestens einer Eigenschaft der Batteriezelle (20) in Abhängigkeit von dem elektrischen Widerstand des Stromkreises (42) konfiguriert ist, wobei
das Zellengehäuse (21) der Batteriezelle (20) mindestens einen elektrisch leitenden Abschnitt umfasst,
auf dem elektrisch leitenden Abschnitt eine Isolierschicht (48) angeordnet ist,
auf der Isolierschicht (48) ein elektrisch leitender Stift (50) angeordnet ist,
der Stromkreis (42) den elektrisch leitenden Abschnitt des Zellengehäuses (21) und den Stift (50) umfasst,
die Isolierschicht (48) zwischen dem elektrisch leitenden Abschnitt des Zellengehäuses (21) und dem Stift (50) angeordnet ist, sodass die Isolierschicht (48) den elektrisch leitenden Abschnitt in einem Anfangszustand der Batteriezelle (20) gegen den Stift (50) elektrisch isoliert, und
die Isolierschicht (48) so konfiguriert ist, dass sie durch das Aufquellen des Zellengehäuses (21) und/oder durch die steigende Temperatur der Batteriezelle (20) so aufgerissen wird, dass der elektrisch leitende Abschnitt mit dem Stift (50) in Kontakt kommt und der elektrische Widerstand des Stromkreises (42) sich ändert.

6. Batterieanordnung (18) nach Anspruch 5, umfassend ein Signalelement (52) innerhalb des Stromkreises (42), wobei das Signalelement (52) so konfiguriert ist, dass es ein Warnsignal bereitstellt, sobald der elektrisch leitende Abschnitt mit dem Stift (50) in Kontakt kommt.

## Revendications

1. Agencement de batterie (18), comprenant :
au moins un élément de batterie (20) comprenant un logement d'élément (21) et au moins deux bornes électriques (30, 32) au niveau du logement d'élément (21) pour fournir et/ou recevoir de l'énergie électrique ;
au moins un circuit électrique (42) couplé au logement d'élément (21), le circuit électrique (42) étant configuré pour modifier sa résistance électrique en raison d'un gonflement du logement d'élément (21) et/ou d'une augmentation de la température de l'élément de batterie (20) ; et
un système de gestion de batterie (40) couplé électriquement au circuit électrique (42) et configuré pour estimer au moins une propriété de l'élément de batterie (20) en fonction de la résistance électrique du circuit électrique (42), dans lequel
les éléments de batterie (20) sont disposés de manière adjacente les uns aux autres de sorte qu'il existe une distance donnée entre les éléments de batterie (20) dans un état initial de l'agencement de batterie (18) ;
chacun des logements d'élément (21) des éléments de batterie (20) comprend au moins une partie électriquement conductrice,
le circuit électrique (42) comprend les parties électriquement conductrices des logements d'élément (21), et
les éléments de batterie (20) sont disposés de telle sorte que le gonflement de l'un ou des deux éléments de batterie (20) diminue la distance entre les éléments de batterie (20) jusqu'à ce que la partie électriquement conductrice de l'un des éléments de batterie (20) touche la partie électriquement conductrice de l'autre élément de batterie (20), ce qui réduit la résistance électrique du circuit électrique (42).

2. Agencement de batterie (18) selon la revendication 1, dans lequel
les logements d'élément (21) sont formés d'un matériau électriquement conducteur de sorte que les parties électriquement conductrices s'étendent sur l'ensemble du logement d'élément correspondant (21).

3. Agencement de batterie (18), comprenant :
au moins un élément de batterie (20) comprenant un logement d'élément (21) et au moins deux bornes électriques (30, 32) au niveau du logement d'élément (21) pour fournir et/ou recevoir de l'énergie électrique ;
au moins un circuit électrique (42) couplé au logement d'élément (21), le circuit électrique (42) étant configuré pour modifier sa résistance électrique en raison d'un gonflement du logement d'élément (21) et/ou d'une augmentation de la température de l'élément de batterie (20) ; et
un système de gestion de batterie (40) couplé électriquement au circuit électrique (42) et configuré pour estimer au moins une propriété de l'élément de batterie (20) en fonction de la résistance électrique du circuit électrique (42), dans lequel
le circuit électrique (42) comprend au moins un fil (44) isolé électriquement de son environnement et s'étendant autour du logement d'élément (21), le fil (44) étant configuré pour modifier sa longueur et donc sa résistance électrique lors du gonflement du logement d'élément (21).

4. Agencement de batterie (18) selon la revendication 3, comprenant
un ruban adhésif qui adhère au logement d'élément (21), la ligne électrique (44) étant intégrée dans le ruban adhésif ou imprimée sur celui-ci.

5. Agencement de batterie (18), comprenant :
au moins un élément de batterie (20) comprenant un logement d'élément (21) et au moins deux bornes électriques (30, 32) au niveau du logement d'élément (21) pour fournir et/ou recevoir de l'énergie électrique ;
au moins un circuit électrique (42) couplé au logement d'élément (21), le circuit électrique (42) étant configuré pour modifier sa résistance électrique en raison d'un gonflement du logement d'élément (21) et/ou d'une augmentation de la température de l'élément de batterie (20) ; et
un système de gestion de batterie (40) couplé électriquement au circuit électrique (42) et configuré pour estimer au moins une propriété de l'élément de batterie (20) en fonction de la résistance électrique du circuit électrique (42), dans lequel
le logement d'élément (21) de l'élément de batterie (20) comprend au moins une partie électriquement conductrice, une couche isolante (48) est disposée sur la partie électriquement conductrice,
une broche électriquement conductrice (50) est disposée sur la couche isolante (48),
le circuit électrique (42) comprend la partie électriquement conductrice du logement d'élément (21) et la broche (50),
la couche isolante (48) est prise en sandwich entre la partie électriquement conductrice du logement d'élément (21) et la broche (50) de sorte que la couche isolante (48) isole électriquement la partie électriquement conductrice contre la broche (50) dans un état initial de l'élément de batterie (20), et
la couche isolante (48) est configurée pour être fissurée par le gonflement du logement d'élément (21) et/ou par l'augmentation de la température de l'élément de batterie (20) de sorte que la partie électriquement conductrice entre en contact avec la broche (50) et que la résistance électrique du circuit électrique (42) change.

6. Agencement de batterie (18) selon la revendication 5, comprenant
un élément de signal (52) à l'intérieur du circuit électrique (42), l'élément de signal (52) étant configuré pour produire un signal d'avertissement lorsque la partie électriquement conductrice entre en contact avec la broche (50).
